**Europäisches Patentamt**

**European Patent Office**

**Office européen des brevets**

(19)

(11) Veröffentlichungsnummer: **0 351 438**
**A1**

(12) **EUROPÄISCHE PATENTANMELDUNG**

(21) Anmeldenummer: **88111476.3**

(22) Anmeldetag: **16.07.88**

(51) Int. Cl.⁴: **F02B 19/04 , F02B 17/00 , F02B 23/10**

Die Patentansprüche 11, 13, 14, 15, 16, 18, 19, 20, gelten durch Nichtzahlung der Anspruchsgebühren als verzichtet (Regel 31 (2) EPÜ).

(43) Veröffentlichungstag der Anmeldung:
**24.01.90 Patentblatt 90/04**

(84) Benannte Vertragsstaaten:
**BE CH ES FR GB IT LI NL SE**

(71) Anmelder: **Köpke, Günter, Dr.-Ing.**
**Plankensteinstrasse 2**
**D-8183 Rottach-Egern(DE)**

(72) Erfinder: **Köpke, Günter, Dr. Ing.**
**Plankensteinstrasse 2**
**D-8183 Rottach-Egern(DE)**
Erfinder: **Köpke, Wolfgang, Dipl. Ing.**
**Forststrasse 20**
**D-2167 Himmelpforten(DE)**

(54) **Verbrennungsmotor.**

(57) Erfindungsgemäß wird ein Verbrennungsmotor vorgeschlagen, der sich dadurch auszeichnet,daß der Kompressionsraum des Zylinders (11) aufgeteilt wird in einen Raum (16) mit zündfähigem Gemisch, das zunächst zündet und einen weiteren Nebenraum (24) (Luftpolster) mit Luft,bzw.magerem Gemisch gefüllt,wobei -sobald der Kolbenboden (17) eines Stufenkolbens (12) die untere Kante (35) eines Zylinderringes (18), in dem der Nebenraum (24) mit dem Luftpolster vorgesehen ist, überschreitet- d.h. kurz vor Abschluß der Kompression und vor der Zündung im Brennraum (16) durch über Luftdüsen und/oder den Kolbenhalsspalt, eingeblasene Luftströme (-strahlen) eine starke Verwirbelung des komprimierten Gemisches erzielt wird,wobei zusätzlich über einen Luftzuführungskanal (30) im Bereich des unteren Totpunktes des Kolbens (12) Frischluft im Bereich des Kolbenhalses (21) und der Kolbenschulter (22) eingeblasen werden kann,um einen Schichtladeeffekt zu erzielen, bei dem zuerst reine Luft und dann zündfähiges Gemisch angesaugt wird, wobei der Kompressionsraum mit dem komprimierten Gemisch als offener Brennraum zwecks niedriger Verbrauchswerte ausgebildet ist. Nach der Zündung, wenn der Kolben (12) die untere Kante (35) des Zylinderringes (18) freigibt, strömt Luft oder mageres Gemisch aus dem Luftpolster stark wirbelnd in die brennenden Gase im Zylinder (11), sodaß durch den hohen Luftüberschuß eine schadstoffarme Verbrennung gefördert wird.

Fig. 1

# VERBRENNUNGSMOTOR

Die Erfindung bezieht sich auf einen Verbrennungsmotor, vorzugsweise Viertaktmotor, mit mindestens einem Zylinder, je einem stufenförmig ausgebildeten Kolben, der in eine Durchmesserreduktion des Zylinders einläuft und einem Verfahren zum Betrieb dieses Motores.

Die Reduzierung von Schadstoffemissionen bei Verbrennungsmotoren ist derzeit ein noch immer anstehendes Problem und wird international mit großem Nachdruck betrieben. Die zulässigen Schadstoffemissionen sind in den meisten Industrieländern durch Verordnungen gesetzlich geregelt.

Nach dem Stand der Technik führt die Nachbehandlung der Abgase von Ottomotoren mittels Katalysator und Lambdasonde zu den niedrigsten Schadstoffmengen.

Hierbei ist Voraussetzung, daß der Motor bei stöchiometrischem Kraftstoff - Luft - Verhältnis ($\lambda$ = 1) betrieben werden muß.

Der Nachteil dieses Verfahrens liegt in dem hohen technischen Aufwand für Katalysator und Lambdasonde, dem bis zu 10% höheren Benzinverbrauch, dem vollen Schadstoffausstoß beim Kaltbetrieb, sowie der Wartung und dem Ersatz des Katalysators mit dem Problem der Abfallbeseitigung.

Außer Katalysatoren zur Schadstoffreduzierung sind weitere Versuche unternommen worden, Viertakt-Ottomotoren so zu betreiben, daß eine Säuberung der Abgase mit verringertem Stickoxydgehalt erzielt wird. Dazu zählen einerseits Zündverzögerungen, um die Druckspitze und Temperaturspitze im Verbrennungshub herabzusetzen, sowie dem Einsatz einer Zylinder-Kolben-Einheit gem. der DE-OS 25 09 628, die im wesentlichen Stufenkolben verschiedener Bauart aufweist, die beim Abwärtshub den Verbrennungsraum in zwei Teilräume unterteilen, von denen jeder der Teilräume mit einer Zündkerze ausgerüstet ist und wie ein normaler Brennraum, jedoch mit zeitlich unterschiedlichen Zündzeitpunkten arbeitet.

Dadurch allein ändern sich indessen nicht die Druck- und Temperaturspitzen, bzw. tritt die beabsichtigte Minderung der Schadstoffemission, speziell der Stickoxyde nicht ein.

Entscheidend ist vielmehr das Gemisch/Luftverhältnis und deren optimale Verwirbelung vor und möglichst auch während der Verbrennung.

Dies aber ist mit dem Vorschlag gem. dieser DE-OS nicht möglich.

Die DE-OS 33 27 948 betrifft einen Kolben mit bekannten schrägen Kolbenböden, in diesem Fall mit keil-, bzw. trapezförmiger Gestalt. Damit wird der Verdichtungskammer eine gewünschte Form gegeben. Aber auch eine solche Anordnung ist nicht geeignet, die Schadstoffentstehung zu beeinflussen.

Der Erfindung liegt daher die Aufgabe zugrunde, einen Verbrennungsmotor zu besitzen, bei dem der Verbrennungsprozeß innerhalb des Zylinders, und zwar sowohl beim Otto-, als auch beim Dieselmotor so abläuft, daß bei möglichst geringem Kraftstoffverbrauch minimale Schadstoffmengen entstehen und dadurch spätere Nachbehandlungen, beispielsweise mittels Katalysator, ganz oder weitgehend überflüssig werden.

Erfindungsgemäß wird dies dadurch erreicht, daß im Bereich des oberen Totpunktes des Kolbens der Durchmesser des Zylinders reduziert ist und der Kolbenhals in diesem Zylinderteil mit geringem Spiel läuft, ein ringförmiger, den Zylinder umgebenden Nebenraum zur Aufnahme eines Luftpolsters vorgesehen ist, der Verbrennungsraum und der Nebenraum zum Zylinder offen und nur im Bereich des oberen Totpunktes voneinander getrennt sind und lediglich durch den Spalt zwischen Kolbenhals und dem Zylinderring miteinander in Verbindung bleiben.

Vorteilhafterweise ist der Zylinderring als getrenntes Bauteil unterhalb des Zylinderkopfes vorgesehen.

Vorteilhafterweise ist der Nebenraum mit dem Verbrennungsraum über mindestens einen Kanal verbunden.

Vorteilhafterweise ist der Zylinderring Teil des Zylinderkopfes.

Vorteilhafterweise ist der Zylinderring Teil des Zylinderblockes.

Vorteilhafterweise ist der Kolbenboden eben ausgebildet.

Vorteilhafterweise ist der Kolbenboden konkav oder konvex geformt.

Vorteilhafterweise weist der Zylinderring mindestens einen spiralförmigen Flügel gegenüber dem Verbrennungsraum auf.

Vorteilhafterweise beträgt die Höhe des Kolbenhalses bis zu etwa 30% der Gesamthöhe des Kolbens.

Vorteilhafterweise ist der Zylinderblock von einem Luftzuführungskanal durchdrungen, der in der Zylinderwand in der Nähe des unteren Totpunktes des Kolbens mündet.

Vorteilhafterweise mündet der Luftzuführungskanal über Düsen in der Zylinderwand.

Vorteilhafterweise ist der Zylinderblock von einem Luftzuführungskanal durchdrungen, der in der Nähe des oberen Totpunktes des Kolbens mündet.

Vorteilhafterweise ist im Kolbenhals mindestens eine Mulde vorgesehen.

Vorteilhafterweise ist in der Kolbenschulter mindestens eine Vertiefung vorgesehen.

Vorteilhafterweise verläuft der Verbindungskanal geradlinig.

Vorteilhafterweise verläuft der Verbindungskanal spiralförmig.

Vorteilhafterweise besteht der Zylinderring aus keramischem Werkstoff.

Vorteilhafterweise ist der Zylinderring mit keramischem Werkstoff beschichtet.

Vorteilhafterweise sind mehrere Zylinderringe als Einlegeteil zusammengefaßt.

Vorteilhafterweise ist/sind der/die Zylinderring-(e) in den Zylinderkopf integriert. Das Verfahren zum Betrieb des Verbrennungsmotores zeichnet sich erfindungsgemäß dadurch aus, daß man den Kompressionsraum des Zylinders in einen Raum mit zündfähigem Gemisch von lambda = 0,6-1,0, welches zunächst gezündet wird und einen weiteren Raum, einen Luftpolsterraum, gefüllt mit Luft, bzw. magerem Gemisch unterteilt, die bzw.das kurz vor Abschluß der Kompression, infolge des Überdruckes in den Luftpolstern teilweise in den Brennraum über Kanäle und einen Spalt stark wirbelnd einblasen und nach der Zündung, sobald der Kolbenboden die untere Kante des Zylinderringes überschreitet, stark wirbelnd in die brennenden Gase des Zylinders einströmen läßt, um mit hohem Luftüberschuß die weitere Verbrennung zu fördern, wobei zusätzlich noch über ein Luftzuführungsrohr im Bereich des unteren Totpunktes des Kolbens Frischluft in den Bereich des Kolbenhalses und der Kolbenschulter eingeblasen werden kann,umeinen Schichtladeeffekt zu erzielen.

Im Gegensatz zu DE-OS 24 02 507 wird erfindungsgemäß der Brennraum nicht in zwei Brennräume getrennt, es bleibt vielmehr stets ein Brennraum und ein Luftpolster erhalten, die im Takt der Kolbenbewegung getrennt bzw. zugeschaltet werden, wobei es je nach dem Verhältnis von Bohrungen des Zylinderringes im Zylinder auf die Abstufung des Kolbens ankommt. Wenn der Kolbenhals sich dem Durchmesser des Zylinders nähert, rükken die Luftpolster aus dem Bereich des Zylinders entweder ganz in den Zylinderkopf oder Zylinderblock.

Dann entsteht aber im Luftpolster kein Überdruck mehr, der zum Überströmen notwendig ist. Auch ist das Gemischverhältnis im Brennraum und Luftpolster gleich, was nicht gewollt ist.

Diese Luftpolster können aus mindestens einem nicht unterteiltem Raum oder aus mehreren unterschiedlich großen und geformten Räumen bestehen.

Der mit der Erfindung erzielte Vorteil liegt insbesondere in folgendem:

Bekanntlich kann der Verbrennungsprozeß mit Luftüberschuß von etwa 50% einerseits das Entstehen von Stickoxyden weitgehend verhindern und andererseits den Kraftstoffverbrauch reduzieren. Ein Nachteil dieser auch als Magermotoren bezeichneten Motoren ist, daß die Fahrtauglichkeit unbefriedigend ist, weil mit zunehmendem Luftüberschuß die Zündwilligkeit abnimmt und schließlich die Zündfähigkeit überhaupt aufhört. Aus diesem Grunde ist es notwendig, im Bereich der durch die Zündkerze ausgelösten Verbrennung ein noch sicher zündfähiges Gemisch anzubieten, das nur vorzugsweise bei annähernd λ = 1 liegt und nach erfolgter Zündung soviel Luft und/oder mageres allein nicht mehr zündfähiges Gemisch zugeführt wird, daß für den gesamten Brennraum der hohe gewünschte Luftüberschuß erreicht wird, was mit dem erfindungsgemäß vorgeschlagenen Verbrennungsmotor gelungen ist. Sobald nämlich der Kolbenboden die untere Kante des Zylinderringes überschreitet, strömt aus dem Luftpolster stark wirbelnd Luft und/oder mageres Gemisch in die brennenden Gase des Zylinders und fördert dadurch auch mit hohem Luftüberschuß die weitere Verbrennung.

In den letzten Jahrzehnten sind auf dem Gebiet der optimalen Verbrennung sowohl beim Otto- als auch Dieselmotor durch bauliche Maßnahmen hauptsächlich im Bereich der Zylinderköpfe und Kolben bedeutende Verbesserungen erzielt worden, beispielsweise durch die Direkteinpritzung oder die Einführung einer Vorkammer, die mit dem Arbeitszylinder durch mindestens eine Öffnung verbunden ist. Beim Wirbelkammerverfahren wird bekanntlich der Kraftstoff auch erst in eine Kammer gespritzt, die wiederum durch eine relativ weite Öffnung mit dem Arbeitszylinder verbunden ist. Auch eine besondere Ausbildung des Kolbenbodens mit beispielsweise kugelförmigemBrennraum dient derselben Zielsetzung.

Die bekannten Maßnahmen reichen insbesondere für den Vergaserbetrieb nicht aus. Zur Reduzierung der Schadstoffemissionen wurden ferner zahlreiche Verfahren entwickelt; u.a. sie die Abmagerung des Gemisches, eine intensive Ladungsbewegung und Schichtladung, oder sequente Zündung genannt.

Somit sind chemische/physikalische Nachbehandlungen der giftstoffbelasteten Abgase weitgehend vermieden,das heißt überflüssig, weil die Giftstoffe wegen der Steuerung des Verbrennungsablaufes nicht erst entstehen können.

Die Erfindung ist nachstehend anhand der in den Abbildungen dargestellten Ausführungsbeispiele näher erläutert.

Es zeigt:

Figur 1 einen Teilschnitt durch einen Zylinder,

Figur 2 eine Ausführungsvariante der Figur 1,

Figur 3 eine Draufsicht auf einen Zylinderring,

Figur 4 einen Schnitt durch eine Ausführungsvariante der Figur 3, und

Figur 5 eine Draufsicht auf Figur 4.

Figur 6 den Längsschnitt durch einen Zylinder gem. Figur 1, und

Figur 7 einen Querschnitt durch die Figur 6.

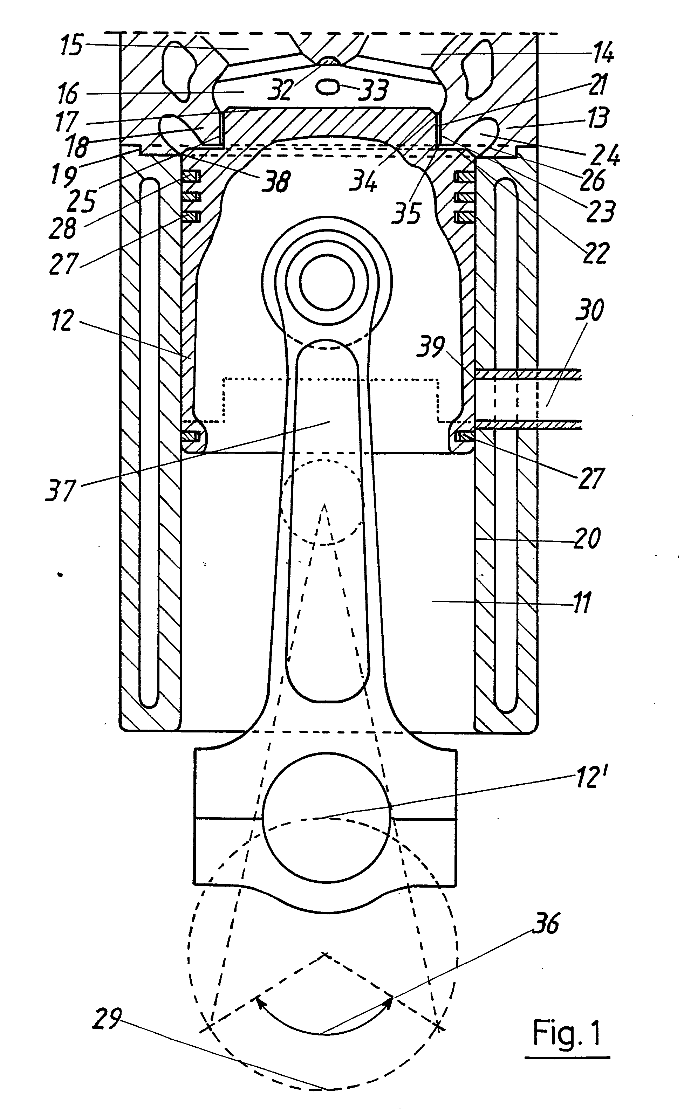

In Figur 1 ist ein erstes Ausführungsbeispiel des Zylinders 11 eines Verbrennungsmotors dargestellt. In dem Zylinder 11 befindet sich der Kolben 12 in der oberen Totpunktstellung. Der Zylinderkopf 13, mit den nicht dargestellten Ventilen in dem Einlaßkanal 14 und Auslaßkanal 15 schließt den Zylinder 11 dichtend ab und bildenso den Verbrennungsraum 16, der vom Zylinderkopf 13, dem Kolbenboden 17 und einem Zylinderring 18 umhüllt wird.

Die Bohrung 23 des Zylinderringes 18 ist mittels der Kante 19 zur Bohrung 20 des Zylinders 11 zentriert. Der Kolben 12 ist als Stufenkolben mit dem zylindrierten Kolbenhals 21 und der Kolbenschulter 22 ausgebildet. Der Kolbenhals 21 ragt in dieser Totpunktstellung mit geringstem Spiel in die Bohrung 23 des Zylinderringes 18. Der das Luftpolster aufnehmende Nebenraum 24 wird durch die Kolbenschulter 22, die Innenseite 25 des Zylinderringes 18 und der Wandfläche 26 des Zylinderkopfes 13 gebildet.

Über den Dichtungs- bzw. Ölabstreifringen 27 ist wie üblich der Feuersteg 28 angeordnet.Ein Luftzuführungsrohr 30 ist im Bereich des unteren Totpunktes vorgesehen.Ein weiteres Luftzuführungsrohr kann ggf.auch zusätzlich am oberen Totpunkt vorgesehen sein.

Im folgenden sind die Arbeitsweisen der verschiedenen Motortypen mit direkter und indirekter Einspritzung sowie Vergaserbetrieb beschrieben. Zunächst als Beispiel ein konventioneller Viertakt-Ottomotor mit direkter Benzineinspritzung.

In Figur 1 befindet sich der Kolben 12 nach dem Ausstoßen der verbrannten Gase in der oberen Totpunktstellung. Das Auslaßventil im Auslaßkanal 15 ist geschlossen und das Einlaßventil im Einlaßkanal 14 offen. Mit dem ersten Hub des Kolbens beginnt das Ansaugen der Luft, mit dem zweiten Hub die Kompression dieser Luft und im Verlauf dieser Kompression die Benzineinspritzung durch die Düse 32 in der Weise, daß im Kompressionsraum die Hauptmenge des Kraftstoffes verbleibt und zu einem gut zündbaren Gemisch komprimiert wird.

Die Luftpolster im Nebenraum 24 werden dagegen vorwiegend mit der vorkomprimierten Luft bzw. mit schwach angereichertem Benzinluftgemisch gefüllt. Der dritte Hub beginnt mit der Zündung durch die Zündkerze 33. Nachdem der Kolben soweit in Richtung unterer Totpunkt gewandert ist, daß die Kante des Kolbenbodens 34 die untere Kante 35 des Zylinderringes verläßt, strömen die heißen Verbrennungsgase in den Zylinder 11. Gleichzeitig oder kurzfristig danach strömt die komprimierte Luft bzw. das schwach angereicherte Luftbenzingemisch spiralförmig von den Flügeln 81 geleitet in die Verbrennungsgase und verwirbeln dort mit ihnen und vollenden somit den Verbrennungsprozeß mit großem Luftüberschuß.

Mit Beginn des vierten Hubes erfolgt das Ausstossen der verbrannten Gase durch den Auslaßkanal 15.

In dem Zeitpunkt, in dem die Kante 34 des Kolbens 12 die Kante 35 des Zylinderringes 18 erreicht, wird der Verbrennungsraum 16 im wesentlichen geschlossen, wobei die verbrannten Gase des Verbrennungsraumes 16 weiter ausgestossen werden,die Verbrennungsgase im Nebenrum 24 werden leicht komprimiert.

Nunmehr beginnt das Viertaktspiel von neuem. Sobald, wie bereits oben beschrieben, die Kante 34 des Kolbens 12 die Kante 35 des Zylinderringes 18 wieder erreicht und den Zylinderraum öffnet, strömt der unter leichtem Überdruck stehende Inhalt des Nebenraumes 24 in den Zylinder, sodaß beim zweiten Hub der Nebenraum 24 wieder mit weitgehend frischer Luft bzw. schwach angereicherter Luft gefüllt werden kann.

Mit diesem Verfahren läßt sich also Schichtladung und Magermotorbetrieb optimal verwirklichen.

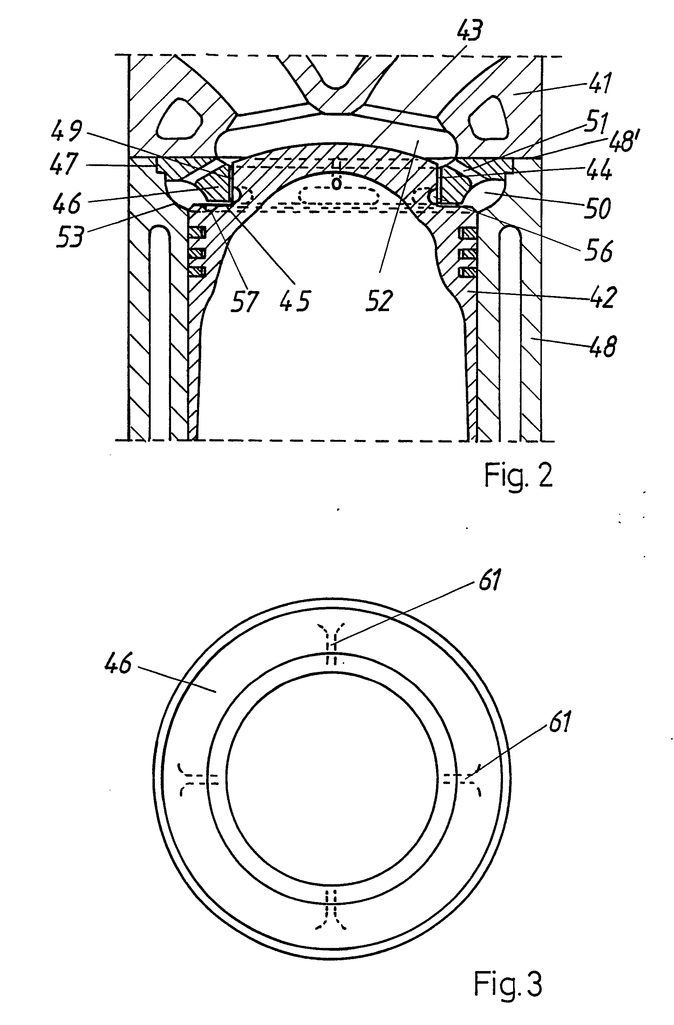

In Figur 2 ist ein weiteres Ausführungsbeispiel dargestellt. In diesem Fall bleibt der Zylinderkopf 41 ohne angegossenen Zylinderring, d.h. also in der konventionellen Bauweise. Der Zylinderring 46 wird als neues Bauteil zentrisch zur Zylinderringbohrung 49 durch die Zylinderringzentrierung 47 in den Zylinderblock 48 dichtend eingesetzt. In dem Zylinderring 46 ist mindestens ein Verbindungskanal 51 angebracht, der den Nebenraum (das Luftpolster) 50 mit dem Brennraum 52 verbindet. Der Kolbenboden 43 ist konkav gewölbt.

Der Nebenraum 50 mit dem Luftpolster wird von dem Zylinderring 46, der Wölbung 53 des Zylinderblockes 48 und der Kolbenschulter 45 gebildet.

Mit 56 ist mindestens eine Mulde am unteren Ende des Kolbenhalses 44 bezeichnet.

In Figur 3 ist der Zylinderring 46 vom Zylinderblock 48 aus gesehen dargestellt. Die vier Verbindungskanäle 61 zielen radial zur Kolbenachse.Die Verbindungskanäle münden in den Brennraum 52 scharfkantig und in den Nebenraum 50 abgerundet, sodaß der Luftstrahl turbulent in den Brennraum 52 tritt und in umgekehrter Richtung während der Verbrennung sich der Luftstrahl hinter der Öffnung zusammenzieht, was mit Verlusten verbunden ist. Der Luftdurchgang zum Brennraum 52 erfolgt also leichter, umgekehrt gebremster.

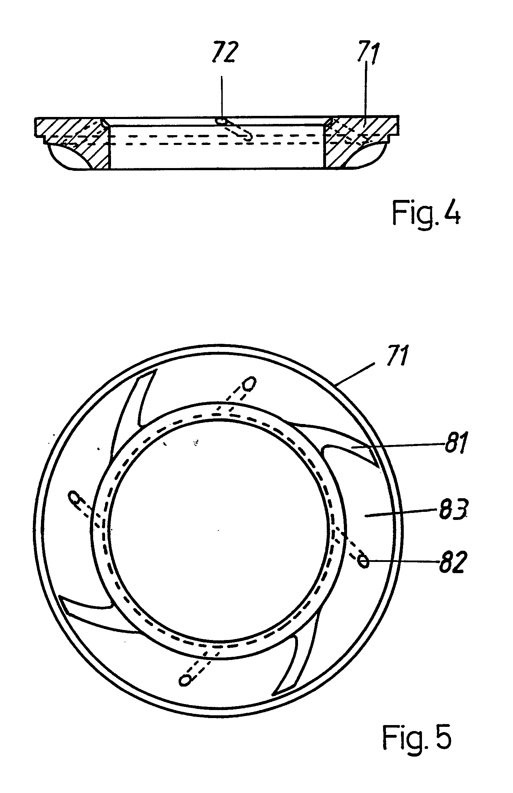

In Figur 4 ist ein Zylinderring 71 im Querschnitt dargestellt. Die Verbindungskanäle 72 sind winkelig zur Achse geneigt.

Figur 5 stellt den Zylinderring 71 aus der Sicht des unteren Totpunktes dar. In dem Luftpolster 83 sind Lamellen 81 spiralförmig nach außen verlaufend angebracht.

Infolge dieser Ausbildung tritt die Luft aus dem Nebenraum 83 mit einem zu Kolbenboden und Kolbenschulter geneigten Drall in den Zylinder und verwirbelt dadurch das brennende Gemisch intensiv.

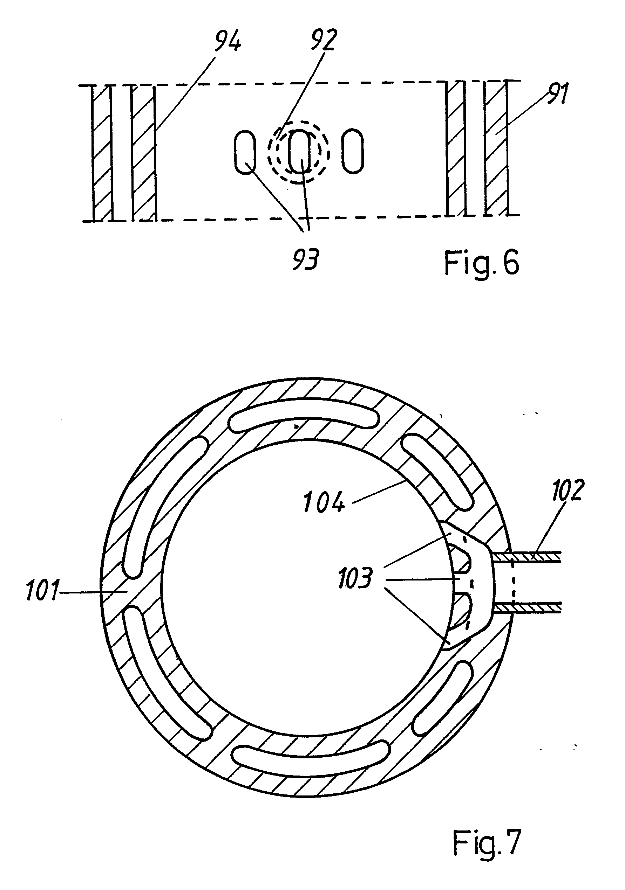

Figur 6 zeigt den oberen Teil des Zylinderblokkes 91 im Bereich des oberen Totpunktes des Kolbens. In den Zylinderblock 91 mündet mindestens ein Luftzuführungskanal 92, der mit mindetens einer Düse 93 in der Zylinderwand 94 mündet.

Figur 7 zeigt einen Querschnitt im Bereich des unteren Totpunktes. Der im Zylinderblock 101 endende Luftzuführungskanal 102 teilt sich in diesem Falle in drei Luftdüsen 103, die in der Zylinderwand 104 liegen.Sie können über den gesamten Querschnitt in beliebiger Zahl verteilt sein.

Die in Figur 2 bis 7 wiedergegebenen Details bieten erfindungsgemäß mehrere Vorteile für Viertakt-Ottomotoren mit indirekter Benzineinspritzung oder Vergaserbetrieb, wie auch für Dieselmotoren.

Beim Viertakt-Ottomotor mit indirekter Benzineinspritzung ist die Arbeitsfolge gleich wie beim beschriebenen Motor mit direkter Einspritzung mit der Abweichung, daß die Benzineinspritzung früher als bei der direkten Einspritzung erfolgt mit dem Effekt, daß die Übergangszone zwischen Luft und Gemisch stärker vermischt und die Schichtbildung nicht so ausgeprägt ist.

Unterstützt werden kann die Schichtladung durch die Luftzufuhr im unteren Totpunkt des Kolbens durch den unteren Luftzuführungskanal.

Nachstehend wird die Arbeitsweise und Wirkung des erfindungsgemäss ausgebildeten Motors anhand eines Viertakt-Ottomotors mit Vergaserbetrieb beschrieben.

Bei Viertaktmotoren mit Vergaserbetrieb bedarf es einer zusätzlichen Einrichtung, weil Schichtladung und und Füllung des Nebenraumes 24 (Luftpolster) mit Luft und/oder magerem Gemisch nicht möglich ist.

Für diesen Fall ist erfindungsgemäß ein Luftzuführungskanal 30 im Bereich des unteren Totpunktes 29 des Kolbens 12 vorgesehen.Durch diesen Luftzuführungskanal 30 wird Luft mit höherem als in diesem Zeitpunkt im Zylinder herrschenden Druck durch mindestens eine Öffnung zugeführt.

Sobald der Kolben 12 beim ersten Takt, dem Ansaugen, sich dem unteren Totpunkt 29 nähert und die Kante 38 der Kolbenschulter 22 den oberen Rand 39 des Luftzuführungskanales überschreitet, wird aus diesem Luft solange in den Zylinder gedrückt, bis zu Beginn des zweiten Taktes die Kolbenkante 38 der Kolbenschulter 22 wieder den oberen Rand 39 des Luftzuführungskanales erreicht und die Luftzufuhr beendet. Die Öffungszeiten richten sich im wesentlichen nach der axialen Höhe des Kolbenhalses 44, die die Größe des Öffnungswinkels 36 in Abhängigkeit vom Kurbelradius der Kurbelwelle bestimmt.

In dem in Fig.1 dargestellten Beispiel eines Kolbendurchmessers von 7o mm und eines Kolbenhubes von 57 mm beträgt der Öffnungswinkel 36 ca 90 Grad, was etwa der Hälfte des gesamten Ansaughubes entspricht.

Zur Verringerung etwaiger Luftverluste in die Kurbelwanne kann am unteren Schaftteil des Kolbens 12 ein zusätzlicher Kolbenring 27 vorgesehen sein.

Die Luftzufuhr kann mittels eines Turboladers oder sonstigen Verdichters herbeigeführt werden.

Um und über dem Kolbenboden 17 und dem Bereich des Kolbenhalses21 und der Kolbenschulter 22 liegt der Bereich reiner Luft oder eines äusserst mageren Gemisches, sodaß bei Vollendung der Kompression im Kompressionsraum in der Nähe der Zündkerze 33 ein fettes Gemisch liegt, das zum Kolbenboden hin immer magerer wird.

Die Luftpolster im Nebenraum 24 sind vorzugsweise mit reiner Frischluft aus dem Hals/Schulter Bereich des Kolbens 12 gespeist worden. Nach der Zündung und in dem Zeitpunkt in dem beim dritten Takt der Verbrennung, die Kolbenkante 38 die Ringkante freigibt, strömen Verbrennungsgase in den Zylinder und vermischen sich wiederum mit dem spiralförmig austretenden Luftpolstergemisch, verwirbeln intensiv und leiten die endgültige Verbrennung ein.

Am Ende dieses Verbrennungstaktes, wenn die Kolbenkante den oberen Rand des Zuführungsrohres erreicht, beginnt wieder das Zuströmen der Luft, sodaß der untere Zylinderteil von Verbrennungsgasen freigespült wird.

Dies hat zufolge, daß am Ende des vierten Taktes, dem Auspuff, der Kompressionsraum keine Verbrennungsgase mehr wie beim konventionellen Hubkolbenmotor enthält, sondern nur noch weitgehend Frischluft.Dies trifft ebenfalls für die Luftpolster im Nebenraum 24 zu.Diese Bauweise hat überdies den Vorteil, daß die heißen Partien des Kolbens 42, nämlich dessen Boden 43, Hals 44 und Kolbenschulter 22 zusätzlich gekühlt werden.

Ein ähnlicher Effekt kann mit einem zweiten Einlaßventil für reine Luft erreicht werden, sodaß ein Dreiventil-Motor entsteht.

Die Arbeitsweise des Motors ist dann wie folgt:Beim ersten Takt als Ansaugtakt öffnet zuerst das Einlaßventil für reine Luft. Nach einem Öffnungswinkel von 10 - 50 Grad schließt dieses Ventil wieder und das Einlaßventil für Gemisch öffnet mit einem Öffnungswinkel 30 - 100 Grad.Dadurch werden in dem Zylinder zwei Schichten angesaugt, nämlich zuerst reine Luft und anschließend fettes, zündfähiges Gemisch. Beim zweiten Takt wird das fette Gemisch vorwiegend in den Brennraum und die Luftpolster im Nebenraum 24 gleichmässig komprimiert, bis die Kolbenkante die Kante des Zylinderringes erreicht. Von diesem Augenblick an steigt der Druck in dem Nebenraum d.h. dem Luftpolster stärker als im Brennraum, sodaß das Gemisch in der Nähe der Verbindungskanäle 51 in den Brennraum strömt und die reine Luft mit Resten des Gemisches in dem Nebenraum 50 verbleibt.Dann verläuft der dritte und vierte Takt wie bereits oben beschrieben,d.h. beim Verbrennungstakt wird durch den Überdruck im Verbrennungsraum heißes Gas in den bzw. die Nebenräume 50 dringen, sodaß die Luft stark wirbelnd in die brennenden Gase strömt,wenn der Kolben 42 den Verbrennungsraum 52 und Zylinder öffnet.

Die gewünschten Kraftstoff - Luft - Verhältnisse werden durch das Verhältnis der Volumina des Brennraumes zu Nebenraum eingestellt.Je größer das Volumen des Luftpolsters im Nebenraum bei gleichbleibender Größe des Brennraumes ist,desto mehr steigt der Luüberschuß und Lambda.

In Fig.1 ist z.B.das Hubvolumen 250 ccm,das Volumen des Brennraumes 17,5 ccm und das Volumen des Nebenraumes 12,4 ccm, sodaß beide zusammen 29,9 ccm betragen. Das Verdichtungsverhältnis berechnet sind demnach zu $\epsilon$ = 9,5.

Durch die Höhe des Kolbenhalses und der Breite der Kolbenschulter läßt sich das Brennraum / Nebenraumverhältnis in weiten Bereichen variieren.

Das Optimum kann für jeden Motor nur durch Versuch erprobt werden.

In der "Schließ - Stellung", d.h.wenn die Kolben kopfkante den Zylinderring erreicht,herrscht ein theoretisch gleicher Druck in beiden Räumen von p = 12,2, berechnet nach der Formel $p_2 = p_1{}^{1,3}$.In gleicher Weise errechnet herrscht im oberen Totpunkt in dem Nebenraum ein um 5 - 6 bar höherer Druck.Dieser Überdruck kann durch die Kolbenbodenform in weiten Grenzen variiert werden.Ein konvexer Kolbenboden,wie in Fig.2 gezeigt, erhöht bei sonst gleichen Abmessungen diesen Überdruck z.B.auf 9 - 10 bar,umgekehrt wird durch einen konkaven Kolbenboden dieser Überdruck reduziert.

Durch den Überdruck erfolgt ein Überströmen des Luftpolsters aus dem Nebenraum über die Verbindungskanäle und zum Teil auch über den durch das Spiel zwischen Kolbenhals und Zylinderringbohrung entstehenden Spalt.

· Die Länge des Kolbenhalses bestimmt die Brenndauer des Gemisches ohne Zufluß von Frischluft aus dem Luftpolster des Nebenraumes. Die "Schließzeit" liegt zwischen 0 und 50 Grad Kurbelwinkel.

Das Verhältnis des Kolbenhalsdurchmessers oder der Zylinderringbohrung zum Zylinderdurchmesser soll möglichst groß sein und den Wert 1 anstreben,weil damit der Brennraum weitgehend offen gestaltet wird.Im Beispiel gem. Fig. 1 beträgt der Zylinderdurchmesser 7o mm,der des Kolbenhalses 53 mm,das Durchmesserverhältnis beträgt also o,76.Das Durchmesserverhältnis liegt somit im Bereich von 1 - o,5.

Es ist günstig,den Kolbenhalsdurchmesser des Stufenkolbens um bis zu 50 % kleiner als den Kolbendurchmesser vorzusehen.Die Höhe des Kolbenhalses kann bis etwa 30 % der gesamten Höhe des Kolbens betragen.Anstelle eines Nebenraumes für die Aufnahme des Luftpolsters können auch mehrere,möglichst ringförmig um den Zylinder herum, angeordnet sein.In der Kolbenschulter können auch mehrere Mulden vorgesehen werden.

Die Erfindung ist selbstverständlich nicht auf die angegebenen Ausführungsbeispiele beschränkt, vielmehr können auch andere Ausführungsformen vorgesehen werden, ohne den Erfindungsgedanken zu verlassen.

## Ansprüche

1.Verbrennungsmotor, vorzugsweise Viertaktmotor mit mindestens einem Zylinder (11), je einem stufenförmig ausgebildeten Kolben (12), der in eine Durchmesserreduktion (23) des Zylinders (11) einläuft , **dadurch gekennzeichnet,** daß im Bereich des oberen Totpunktes des Kolbens (12) der Durchmesser des Zylinders (11) reduziert ist und der Kolbenhals (21) in diesem Zylinderteil mit geringem Spiel läuft, ein ringförmiger, den Zylinder (11) umgebender Nebenraum (24) zur Aufnahme eines Luftpolsters vorgesehen ist,der Verbrennungsraum (16) und der Nebenraum (24) zum Zylinder (11) offen und nur im Bereich des oberen Totpunktes voneinander getrennt sind und lediglich durch den Spalt zwischen Kolbenhals (21) und dem Zylinderring (18) miteinander in Verbindung bleiben.

2.Verbrennungsmotor nach Anspruch 1, **dadurch gekennzeichnet,** daß der Zylinderring (46) als getrenntes Bauteil unterhalb des Zylinderkopfes (41) vorgesehen ist.

3.Verbrennungsmotor nach Anspruch 1 und 2, **dadurch gekennzeichnet,** daß der Nebenraum (50) mit dem Verbrennungsraum (52) über mindestens einen Kanal (51) verbunden ist.

4.Verbrennungsmotor nach Anspruch 1 und einen der folgenden, **dadurch gekennzeichnet, daß** der Zylinderring (18) Teil des Zylinderkopfes (13) ist.

5. Verbrennungsmotor nach Anspruch 1 und einen der folgenden, **dadurch gekennzeichnet, daß** der Zylinderring (18) Teil des Zylinderblockes (48) ist.

6. Verbrennungsmotor nach Anspruch 1 und einen der folgenden, **dadurch gekennzeichnet, daß** der Kolbenboden (17) eben ausgebildet ist.

7. Verbrennungsmotor nach Anspruch 1 und einen der folgenden, **dadurch gekennzeichnet, daß** der Kolbenboden (43) konkav oder konvex geformt ist.

8. Verbrennungsmotor nach Anspruch 1 und einen der folgenden, **dadurch gekennzeichnet, daß** der Zylinderring (71) mindestens einen spiralförmigen Flügel (81) gegenüber dem Verbrennungsraum (16) aufweist.

9. Verbrennungsmotor nach Anspruch 1 und einen der folgenden, **dadurch gekennzeichnet, daß** die Höhe des Kolbenhalses (21) bis zu etwa 30 % der Gesamthöhe des Kolbens (12) beträgt.

10. Verbrennungsmotor nach Anpruch 1 und einen der folgenden, **dadurch gekennzeichnet, daß** der Zylinderblock (101) von einem Luftzuführungskanal (102) durchdrungen ist, der in der Zylinderwand (104) in der Nähe des unteren Totpunktes des Kolbens (12) mündet.

11. Verbrennungsmotor nach Anspruch 1 und einen der folgenden, **dadurch gekennzeichnet, daß** der Luftzuführungskanal (92,102) über Düsen (93,103) in der Zylinderwand (104) mündet.

12. Verbrennungsmotor nach Anspruch 1 und einen der folgenden, **dadurch gekennzeichnet, daß** der Zylinderblock (101) von einem Luftzuführungskanal (92) durchdrungen ist, der in der Nähe des oberen Totpunktes des Kolbens (12) mündet.

13. Verbrennungsmotor nach Anspruch 1 und einen der folgenden, **dadurch gekennzeichnet, daß** im Kolbenhals (44) mindestens eine Mulde (56) vorgesehen ist.

14. Verbrennungsmotor nach Anspruch 1 und einen der folgenden, **dadurch gekennzeichnet, daß** in der Kolbenschulter (55) mindestens eine Vertiefung (57) vorgesehen ist.

15. Verbrennungsmotor nach Anspruch 1 und einen der folgenden, **dadurch gekennzeichnet, daß** der Verbindungskanal (51) geradlinig verläuft.

16. Verbrennungsmotor nach Anspruch 1 und einen der folgenden, **dadurch gekennzeichnet, daß** der Verbindungskanal (82) spiralförmig verläuft.

17. Verbrennungsmotor nach Anspruch 1 und einen der folgenden, **dadurch gekennzeichnet, daß** der Zylinder ring (18,46) aus keramischem Werkstoff besteht.

18. Verbrennungsmotor nach Anspruch 1 und einen der folgenden, **dadurch gekennzeichnet, daß** der Zylinderring (18,46) mit keramischem Werkstoff beschichtet ist.

19. Verbrennungsmotor nach Anspruch 1 und einen der folgenden, **dadurch gekennzeichnet, daß** mehrere Zylinderringe (46) als Einlegeteil zusammen-gefasst sind.

20. Verbrennungsmotor nach Anspruch 1, **dadurch gekennzeichnet, daß** der/die Zylinderringe (18) in den Zylinderkopf (13) integriert ist/sind.

21. Verfahren zum Betrieb eines Verbrennungsmotors nach Anspruch 1 und einen der folgenden, **dadurch gekennzeichnet, daß** man den Kompressionsraum des Zylinders in einen Raum mit zündfähigem Gemisch von lambda = 0,6-1,0, welches zunächst gezündet wird und einen weiteren Raum, einen Luftpolsterraum, gefüllt mit Luft bzw. magerem Gemisch unterteilt, die bzw. das kurz vor Anschluß der Kompression, infolge des Überdruckes in den Luftpolstern teilweise in den Brennraum über Kanäle und einen Spalt stark wirbelnd einblasen und nach der Zündung, sobald der Kolbenboden die untere Kante des Zylinderringes überschreitet, stark wirbelnd in die brennenden Gase des Zylinders einströmen läßt, um mit hohem Luftüberschuß die weitere Verbrennung zu fördern, wobei zusätzlich noch über ein Luftzuführungsrohr im Bereich des unteren Totpunktes des Kolbens Frischluft in den Bereich des Kolbenhalses und der Kolbenschulter eingeblasen werden kann, um einen Schichtladeeffekt zu erzielen.

Fig. 1

Fig. 2

Fig.3

Fig. 4

Fig. 5

Fig. 6

Fig. 7

Europäisches Patentamt

**EUROPÄISCHER RECHERCHENBERICHT**

Nummer der Anmeldung

EP 88 11 1476

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 703 130 (KOEPKE)<br>* Gesamtes Dokument *<br>----- | 1-21 | F 02 B 19/04<br>F 02 B 17/00<br>F 02 B 23/10 |
| | | | **RECHERCHIERTE SACHGEBIETE (Int. Cl.4)**<br><br>F 02 B 17/00<br>F 02 B 19/00<br>F 02 B 21/00<br>F 02 B 23/00 |

Der vorliegende Recherchenbericht wurde für alle Patentansprüche erstellt

| Recherchenort | Abschlußdatum der Recherche | Prüfer |
|---|---|---|
| BERLIN | 16-03-1989 | NORDSTROEM U.L.N. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)